# EUROPEAN PATENT APPLICATION

(11) **EP 1 071 263 A1**
(43) Date of publication of application: **24.01.2001**
(21) Application number: 00115649.6
(22) Date of filing: 20.07.2000
(51) Int. Cl.: H04M 1/60

(54) **Automatic receiver volume control apparatus and method for a portable radio telephone set**

(30) Priority: 21.07.1999 KR 9929503
(71) Applicant: SAMSUNG ELECTRONICS CO., LTD., Suwon-City, Kyungki-do (KR)
(72) Inventor: Kim, Min-Soo, Seoul (KR)
(74) Representative: Grünecker, Kinkeldey, Stockmair & Schwanhäusser Anwaltssozietät

(57) **Abstract**

Disclosed is an automatic receiver volume control apparatus and method for a portable radio telephone set which can make a proper control of a receiver volume according to whether or not a user is in contact with a receiver part of the telephone set during a telephone call. The automatic receiver volume control apparatus includes an optical sensor section, positioned adjacent to a side of a receiver part of the telephone set, for sensing an input of external light, a control section for outputting a predetermined receiver volume control signal in accordance with an external light sensing result of the optical sensor section during a telephone call in an automatic receiver volume control mode, and a receiver volume control section for controlling amplification and attenuation of a receiver speech in accordance with the receiver volume control signal inputted from the control section.

## Description

The present invention relates generally to a portable radio telephone set. In particular, the present invention relates to an automatic receiver volume control apparatus and method for a portable radio telephone set which can make a proper control of a receiver volume according to whether or not a user is in contact with a receiver part of the telephone set during a telephone call.

Recently, with the increasing use of the portable radio telephone set, diverse tasks have been performed through the telephone set, and thus more convenient use of the telephone has been sought. However, most users still experience inconvenience in using the portable radio telephone for the following reasons:

First, during a telephone call, a user may often perform a key input operation while he/she looks at a display screen provided on the telephone set. In this case, the user should take his/her ear away from the receiver part of the telephone to make the key input possible, and this causes the user to be unable to hear the opposite party's speech, giving inconvenience to the user. For instance, if the user intends to store a specified telephone number, which the opposite party gives during a telephone call, in his/her telephone set, he/she experiences the above-mentioned inconvenience since he/she must perform the input task of the telephone number while looking at the display screen. The user's ARS task, SMS task, pager task, etc., during a telephone call also cause the user the same inconvenience as mentioned above, and a user's demand for solving this problem is on the rise.

Accordingly, the present invention has been made in an effort to solve the problems occurring in the related art.

It is therefore the object of the present invention to provide an automatic receiver volume control apparatus and method for a portable radio telephone set which can provide a user a more convenient calling environment.

The foregoing object is solved by the subject-matters of independent claims 1, 3 and 5.

Preferred embodiments of the present invention are the subject-matters of the dependent claims.

The above object is achieved, in particular, by properly controlling a receiver volume according to whether or not the user is in contact with a receiver part of the telephone set during a telephone call.

According to a first aspect of the present invention, there is provided an automatic receiver volume control apparatus for a portable radio telephone set comprising an optical sensor section, positioned adjacent to a side of a receiver part of the telephone set, for sensing an input of external light, a control section for outputting a predetermined receiver volume control signal in accordance with an external light sensing result of the optical sensor section during a telephone call in an automatic receiver volume control mode, and a receiver volume control section for controlling amplification and attenuation of a receiver speech in accordance with the receiver volume control signal inputted from the control section.

The above object and advantages of the present invention will become more apparent by describing in detail preferred embodiments thereof with reference to the attached drawings in which:
FIG. 1 is a block diagram of an automatic receiver volume control apparatus for a portable radio telephone set according to a preferred embodiment of the present invention;
FIG. 2 is a flowchart illustrating an automatic receiver volume control method for a portable radio telephone set according to a preferred embodiment of the present invention; and
FIG. 3 is a perspective view of a portable radio telephone set incorporating the automatic receiver volume control apparatus according to a preferred embodiment of the present invention.

Reference will now be made in greater detail to the preferred embodiment of the present invention. In the following description of the present invention, a detailed description of known functions and configurations incorporated herein will be omitted when it may make the subject matter of the present invention rather unclear. Also, specified items to be described below are defined in consideration of the function of the present invention, and since they may be different according to the intention of a user or chip designer, they should be defined based on the whole description of the present invention. Meanwhile, in the following description of the present invention, an embodiment of the present invention applied to a portable radio telephone set is explained, but it would be also possible to apply the present invention to a wired telephone and other call performing apparatuses having a sending/receiving function. Hereinafter, the present invention will now be explained with reference to the accompanying drawings.

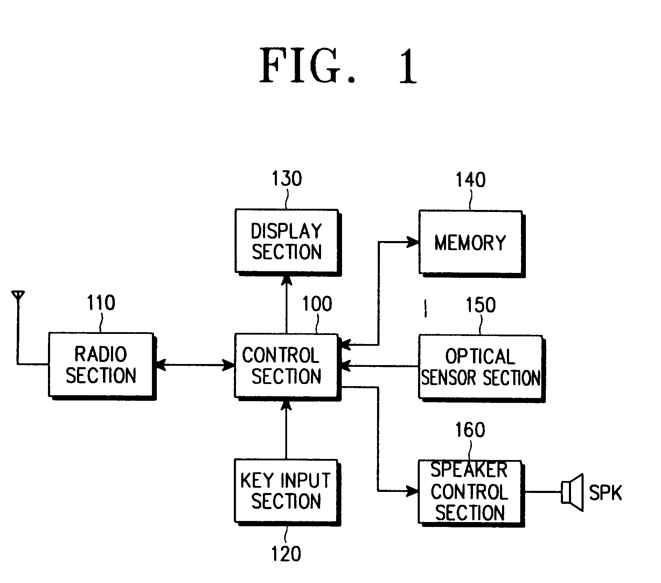

FIG. 1 is a block diagram of an automatic receiver volume control apparatus for a portable radio telephone set according to a preferred embodiment of the present invention. In illustrating the construction of the automatic receiver volume control apparatus of FIG. 1, the essential elements of the typical radio telephone such as a dual tone multi-frequency (DTMF) section and so on are not directly related to the subject matter of the present invention, and the detailed explanation thereof will be omitted.

Referring to FIG. 1, a radio section 110 is a typical section of the portable radio telephone set for processing transmission/reception of a radio signal. The radio section 110 performs the determination of transmission/reception channels between an external base station and the portable radio telephone set, and the radio transmission/reception of the user's audio signal. In order to achieve this, the radio section is provided with an antenna for directly performing the radio transmission/reception through air. A display section 130 displays thereon the whole operation state of the portable radio telephone set and inputted telephone numbers, so that the user can visibly recognize the display state. The display section 130 is typically implemented by a liquid crystal display (LCD). A key input section 120 is provided with a plurality of keys including keys for determining various modes, an end key, numeral keys for dialing, and a volume key for manually controlling a receiver volume. The key input section 120 serves as a user input interface, and produces key data corresponding to input keys. A control section 100 controls the whole operation of the portable radio telephone set, and outputs a receiver volume control signal according to a result of an external light sensed by an optical sensor section 150. The optical sensor section 150 senses the external light, and outputs the receiver volume control signal corresponding to the result of sensing. This operation is performed in the automatic receiver volume control mode during a telephone call. The operating program of the control section 100 and data produced according to the execution of the program are stored in a memory 140. The memory 140 is implemented by non-volatile memory such as a flash memory and EEPROM, and stores the program for controlling the whole operation of the portable radio telephone set and initial service data. Meanwhile, the control section 100 is provided with a volatile memory, i.e., RAM, built therein in addition to the memory 140, which temporarily stores various data produced according to the operation of the portable radio telephone set. The optical sensor section 150 senses the input of the external light, and outputs to the control section 100 a sensed signal according to the sensing result. The optical sensor section 150 is implemented by an optical sensor, which is installed adjacent to one side of a speaker SPK implementing the receiver section.

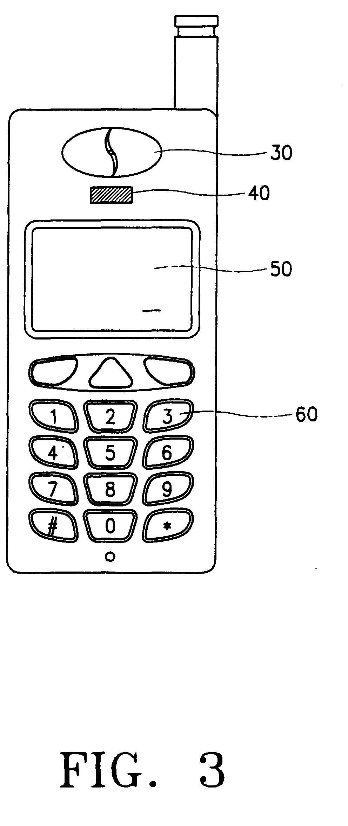

FIG. 3 is a perspective view of a portable radio telephone set incorporating the automatic receiver volume control apparatus according to a preferred embodiment of the present invention. Referring to FIG. 3, an optical sensor 40 of the optical sensor section 150 is installed adjacent to a lower portion of a speaker 30 of the receiver section. If the user holds the speaker to his/her ear during a telephone call, the input of the external light to the optical sensor 40 is intercepted. If the user takes the speaker away from his/her ear, the external light is input to the optical sensor 40 that is positioned adjacent to the speaker 30. Below the optical sensor 40 is provided a liquid crystal display 50. A key pad 60 is for the user's input of information required for performing other tasks during a telephone call. A speaker control section 160 performs the amplification and attenuation of the receiver speech signal in accordance with the receiver volume control signal inputted from the control section 100. The amplification and attenuation factors are determined as proper values by experiments.

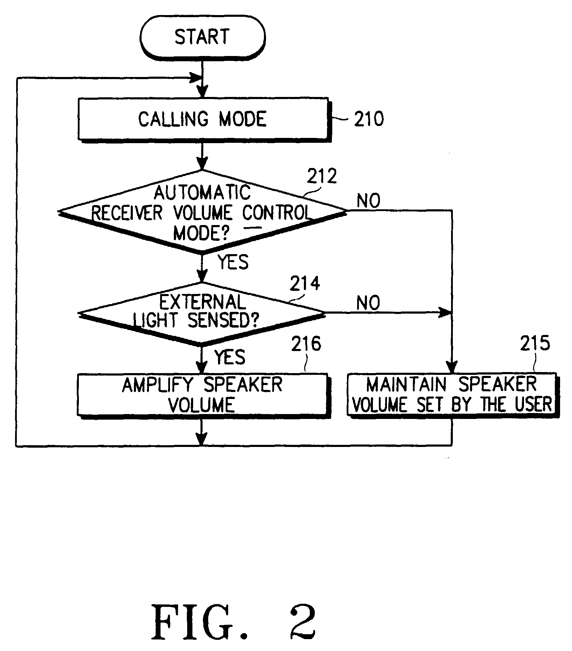

FIG. 2 is a flowchart illustrating the automatic receiver volume control method for a portable radio telephone set according to the preferred embodiment of the present invention. Referring to FIG. 2, a calling mode is performed during a telephone call at step 210. Then, it is judged whether the automatic receiver volume control mode is determined at step 212. That is, it is judged whether the user has determined the automatic receiver volume control mode. If so, it is judged whether the external light is sensed by the optical sensor section 150 at step 214. In practice, it is judged whether the user takes his/her ear away from the speaker to perform other tasks during a telephone call. If the user holds the speaker to his/her ear, the external light is not sensed, while if the user takes his/her ear away from the speaker, the external light is sensed. In the case that the external light is sensed at step 214, the receiver speech signal is amplified with the predetermined amplification factor, and then outputted to the speaker at step 216, so that the user can hear the amplified receiving speech even though he/she took his/her ear away from the speaker of the telephone set. Meanwhile, in the case that the external light is not sensed at step 214, or the automatic receiver volume control mode is not determined at step 212, the receiver volume, i.e., the speaker volume, is controlled to be that set by the user's input of the volume key. This corresponds to the normal receiver volume state. In the meanwhile, such an optical sensor may be implemented so that its receiver volume could be adjusted in several steps, each step depending upon the amount of light intensity detected by it.

As described above, the present invention has the advantages that in using the portable radio telephone set, user convenience is increased, and the user can hear the opposite party's speech clearly even when the user takes his/her ear away from the speaker of the telephone set.

## Claims

1. An automatic receiver volume control apparatus for a portable radio telephone set comprising:
an optical sensor section, positioned adjacent to one side of a receiver part of the telephone set, for sensing an input of an external light;
a control section for outputting a predetermined receiver volume control signal in accordance with an external light sensing result of the optical sensor section during a telephone call in an automatic receiver volume control mode; and
a receiver volume control section for controlling amplification and attenuation of a receiver speech in accordance with the receiver volume control signal inputted from the control section.

2. The automatic receiver volume control apparatus of claim 1, wherein the receiver volume control signal comprises a volume control signal according to a receiver speech amplification and a volume control signal determined by a user.

3. An automatic receiver volume control method for a portable radio telephone set comprising:
a first step of sensing an input of an external light through an optical sensor provided adjacent to one side of a receiver part of the telephone set in an automatic receiver volume control mode during a telephone call;
a second step of outputting a receiver volume control signal in accordance with a sensing result of the external light; and
a third step of controlling amplification and attenuation of a receiver speech outputted with a predetermined volume in accordance with the outputted volume control signal.

4. The automatic receiver volume control method of claim 3, wherein the third step comprises the steps of:
amplifying the receiver speech outputted with the predetermined volume if the receiver volume control signal according to the sensing result of the external light is inputted; and
outputting the receiver speech outputted with the volume predetermined by a user if the receiver volume control signal is inputted in a state that the external light is not sensed.

5. A portable radio telephone set comprising the automatic receiver volume control apparatus of claim 1 or 2.
